(19) Europäisches Patentamt
European Patent Office
Office européen des brevets

(11) **EP 4 567 722 A1**

(12) **EUROPEAN PATENT APPLICATION**

(43) Date of publication:
**11.06.2025 Bulletin 2025/24**

(21) Application number: **23307159.6**

(22) Date of filing: **08.12.2023**

(51) International Patent Classification (IPC):
*G06T 7/00* (2017.01)

(52) Cooperative Patent Classification (CPC):
**G06T 7/0004;** G06T 2207/10016;
G06T 2207/20081; G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Electricité de France**
**75008 Paris (FR)**

(72) Inventors:
• **DE FREITAS, Felipe**
**BRIGHTON, BN3 1TE (GB)**

• **TRAN, Van-Xuan**
**HANDFORTH, SK9 3NJ (GB)**
• **PHILLIPS, Paul**
**BROMSGROVE WORCESTERSHIRE, B61 8NY (GB)**
• **PATEL, Nium**
**LONDON, NW6 6DD (GB)**

(74) Representative: **Plasseraud IP**
**104 Rue de Richelieu**
**CS92104**
**75080 Paris Cedex 02 (FR)**

(54) **ARTIFICIAL INTELLIGENCE METHOD FOR EXTRACTING ANOMALIES AND FORECASTING A FUTURE STATE OF A NUCLEAR SYSTEM**

(57) The invention relates to a computer implemented method for monitoring a state of a system in a nuclear site, at least parts of the system being pictured by at least one camera, the method comprising:
- collecting (S1) pictures of at least one part of the system, taken by at least one camera over time,
- implementing (S2) a first artificial intelligence to detect at least one defect in said pictures,
- implementing (S3) a second artificial intelligence to provide a prediction of a future state of said part of the system, from the at least one defect and according to a current operation mode of the system,
- operating (S4) the system according to an adapted operational procedure, depending on said prediction.

FIG. 1

**Description**

## TECHNICAL FIELD

The present disclosure relates to a method to automatically identify anomalies and defects in picture data of a system in a nuclear site. The method also enables to predict the future state of the system based on the identified defects.

## BACKGROUND ART

A nuclear reactor is a highly intricate system, characterised by arrays of nonlinear, dynamic, and time-varying parameters. Because of the high-risk nature of nuclear processes in nuclear reactor, such as nuclear advanced gas-cooled reactor (AGR) and pressurized water reactor (PWR), buildings and infrastructure must be closely inspected and operated on a regular basis following strict operating rules. One primary area of concern is the stress endured by the ensemble of nuclear reactor brick arrays due to the extreme temperatures generated during the fission reaction, neutron irradiation-induced material degradation, and various other stressors. These factors can lead to deformations in the brick arrays, which have the potential to result in critical failures. Therefore, there is an urgent need to implement operations and systems capable of swiftly assessing the brick array's condition, estimating potential deformations, and helping for establishing pre-emptive maintenance scheduling to prevent failures and ensure the reliability of the reactors.

Generally, nuclear system inspections are predominantly undertaken manually by human operators. This typically involves working at height, with significant scaffolds or large cranes, and implying to put human operators at risk within a highly hazardous environment. In addition, the maintenance of reactors and nuclear sites involves significant operational constraints, where the inspection costs and inspection times often reduce the frequency of inspections below what would be ideal.

Remote Visual Inspection (RVI) serves as a common approach for assessing the condition of critical components and sub-structures within nuclear power plants, especially in areas that are challenging to access and exposed to high radiation levels. Typical RVI data include images and reports manually or automatically recorded for different sections of the reactor brick arrays.

However, the current procedure for conducting these RVI acquisitions and inspections involves manual compilation and report generation after data acquisition. Thus, interpreting the inspection footage is a labour-intensive task, often complicated by issues like localising and dimensioning anomalies and defects from video feeds that may contain uncertainties stemming from factors such as lens distortion, inconsistent lighting, etc. Moreover, due to the stochastic nature of data collection during reactor operation, data for a specific brick array may be available for several years but not necessarily consecutively.

In addition to the arduous nature of the task and the associated risk for operators, inspections of nuclear reactor components lead to a loss of productivity and increased costs. In fact, the nuclear reactor may have to be serviced too regularly in order to prevent potential defects, thereby necessitating more regular shutdowns or reductions in activity of the power plant. Besides, it is currently difficult to predict the future development of defects and anomalies in nuclear components, and to anticipate optimal operating modes to minimise productivity losses.

The existing methodologies for modelling and predicting defect and crack formation in brick arrays involve typically employing Finite Element Methods (FEM), based on input history, to simulate the physical impact on the bricks during operational cycles. Nevertheless, the existing model does not take into account the development history of defects cannot take into account possible patterns of crack formation through multiple operation cycles. The nonlinear interactions arising from the collective contact among lattice elements of the bricks further contribute to the complexity of the simulations. Moreover, these approaches are computationally intensive and time-consuming, primarily due to the erratic and unpredictable nature of the bricks material.

## SUMMARY

The present disclosure aims at improving the situation. In particular, the present disclosure aims at overcoming at least some of the limitations of the prior art discussed above, by proposing a method for monitoring efficiently and semiautomatically a state of a system, by detecting one or several defect(s) of the system based on collected data of the system. The disclosed method then aims at predicting a future state of the system based on the identified defect(s), in order to provide insights for operating the system with an adapted and optimized operational procedure.

For this purpose, and according to a first aspect, the present disclosure relates to a computer implemented method for monitoring a state of a system in a nuclear site, at least parts of the system being pictured by at least one camera, the method comprising:

- collecting pictures of at least one part of the system, taken by at least one camera over time,
- implementing a first artificial intelligence to detect at least one defect in said pictures,
- implementing a second artificial intelligence to provide a prediction of a future state of said part of the system, from the at least one defect and according to a current operation mode of the system,
- operating the system according to an adapted operational procedure, depending on said prediction.

In specific embodiments, the first artificial intelligence comprises a classification model to:

- extract and label features from said pictures, and
- detect and characterize said at least one defect.

In specific embodiments, the classification model further provides an output defect report comprising the picture, the defect and the associated labelled features.

In specific embodiments, the method further comprises a receiving of said output defect report, in an input of said second artificial intelligence.

In specific embodiments, the second artificial intelligence comprises a neural network algorithm integrating a physical model of dynamics of the system.

In specific embodiments, the second artificial intelligence comprises said neural network algorithm and a Bayesian probabilistic model, and said second artificial intelligence provides a confidence value of at least said prediction.

In specific embodiments, the second artificial intelligence is an iterative process, in which the prediction is calculated at each iteration from a result generated by the Bayesian probabilistic model at a previous iteration.

In specific embodiments, the collected pictures of at least one part of the system comprise Remote Visual Inspection image data, recorded at different times, different angles and different lightings, said pictures being pre-processed prior to their processing by the first artificial intelligence.

In specific embodiments, data of said collected pictures are collected further with historical reports data of the system state.

In specific embodiments, pictures and reports data are collected for said at least one part of the system, and arranged in a vector representing a current state of said at least one part of the system, and the first artificial intelligence further implements a search engine to detect said at least one defect in said vector, by comparing said vector to a vector database of defects.

In specific embodiments, the system comprises graphite bricks of a nuclear reactor, the collected pictures further comprising physical state information of the graphite bricks, and wherein said defect comprises at least one of a graphite brick crack and abnormal displacement of a brick towards another.

In specific embodiments, the physical model comprises a model of dynamics of cracks.

According to a second aspect, the present disclosure relates to a computer program, comprising instructions for implementing the method according to any one of the preceding claims, when they are executed by a processing circuit.

According to a third aspect, the present disclosure relates to a device comprising a processing circuit for carrying out the method according to any one of the embodiments of the present disclosure.

The implementation of the method above provides many advantages. It can imply cost savings by improving the efficiency of image data analysis, reducing downtime through predictive maintenance, and preventing costly structural failures. Moreover, the defect detection is improved, as well as the predictive modelling, contributing then to enhanced safety, particularly in critical infrastructure like nuclear reactors. Moreover, the streamlining of the analysis and reporting processes improves efficiency and can save time and human resources. Moreover, the ability to extract available insights from vast amounts of data can aid in better decision-making.

**BRIEF DESCRIPTION OF DRAWINGS**

The invention will be better understood upon reading the following description, given as an example that is in no way limiting, and made in reference to the figures which show:

- Figure 1 is a diagram representing the computer implemented method workflow, comprising four main steps in solid line frames, optional steps in dashed line frames, and the different inputs and outputs at each step of the method,
- Figure 2 is a diagram showing the computer system carrying the computer implemented method,
- Figure 3 shows four images of four types of defects of graphite bricks.

In these figures, references identical from one figure to another designate identical or analogous elements. For reasons of clarity, the elements shown are not to scale, unless explicitly stated otherwise.

Also, the order of steps represented in these figures is provided only for illustration purposes and is not meant to limit the present disclosure which may be applied with the same steps executed in a different order.

**DESCRIPTION OF EMBODIMENTS**

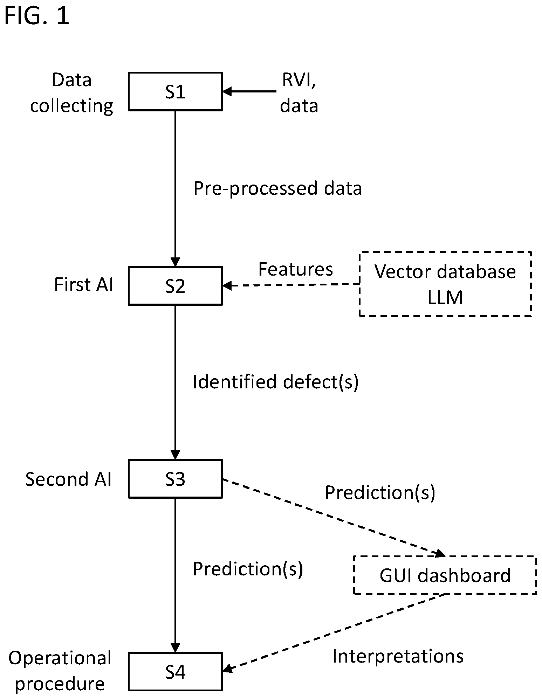

The disclosed method aims to improve the safety, reliability and efficiency of nuclear site inspections by automatically detecting anomalies in a system of the nuclear site and generating predictions about its future state. To achieve this, the method uses remote data and system maintenance reports implemented and processed by deep learning models. The method is also configured to provide fast, clear and relevant results to assist operators in their decision making for determining the most optimal nuclear site operating procedures. The main stages of such a method are illustrated in Figure 1 and detailed hereinafter.

Moreover, in the present disclosure and in the following text, the computer implemented method is particularly described for nuclear reactor systems, such as advanced gas-cooled reactor (AGR) or pressurized water reactor (PWR), with graphite brick neutron moderators. For instance, crack defect data on graphite bricks, displacements of bricks relative to each other, and/or crack propagation constitute typical anomalies that the described method seeks to identify and characterise in particular.

Alternatively, the method can also be applied to any other system of the nuclear site comprising for example a steam generator and/or a steam powered turbine. The nuclear system could also include a cooling circuit, having tubes which might present local defects (stains due to corrosion, or cracks, crack initiation, through-thickness cracks, opening or closed cracks, etc).

Reference is now made to figure 1.

The first step S1 of the method consists of collecting data and pictures of at least one part of the system of the nuclear site. Especially, the collected data is essentially based on Remote Visual Inspection (RVI) image data, notably of graphite brick arrays of AGR and/or fuel channels of AGR or PWR. RVI inspections typically yield two types of data formats: video feeds and "chanoramas" images (360° image of the inside surface of a reactor fuel channel). These images can be recorded by one or several cameras positioned to capture the fuel channels' interior, either directly or for example via mirrors controlled by motors. RVI data also involve overlapping scans, for example six overlapping scans with a 70-degree field of view, and each taken at different orientations, for example six orientations, and/or captured under various lighting conditions, allowing for global and comprehensive recording of the inner surfaces.

Moreover, historical operational data can also be considered and collected during the first stage S1. The historical maintenance data can contain information about for example past safety hazards, defects, equipment failures, etc.

Additionally, other physical state data of the monitored site can be collected and implemented in the method, such as temperature/pressure variations, neutron flux, coolant flow rates, acoustic or vibrations monitoring, etc. These can be recorded by any specialized sensors positioned in the system.

Indeed, all relevant data, of any format could be used, and ensures the inclusion of a broad spectrum of parameters recorded throughout the operational timeframe of the monitored system. Moreover, the data can be collected from observations during periodic or occasional inspections, or a combination thereof.

The collected data is then pre-processed for instance by typical image processing algorithms. For instance, the pre-processing includes image smoothing algorithms aimed at minimising background pixel intensity variance in the data, while preserving the integrity of pixels related to objects of interest. In the case of a nuclear reactor, wherein the core is confined by graphite brick arrays, the objects of interest notably include brick cracks and brick interfaces. Additionally, image normalisation and saturation techniques can be applied to mitigate non-uniform image background illumination and eliminate clusters of bright pixels, typically associated with specular reflections. In the case of other types of data, such as textual, acoustic, state parameters, etc, they can also be converted, pre-processed, etc, using any adequate and conventional methods. Data can further be formatted in an optimized format and size, suitable for its implementation during the following second step S2 of the method.

As displayed on figure 1, the step S2 of the method consists in extracting and labeling the features in the collected data and images. Specifically, this step is performed in order to identify the potential anomalies and defects (such as brick cracks and/or graphite brick displacements in the nuclear reactor) of the monitored system in the data.

To do so, a first artificial intelligence is employed which is designed to identify and label features in RVI images and data.

According to an embodiment, the first artificial intelligence comprises a Computer Vision (CV) model and/or pixel analysis algorithms for pictures analysis and for extracting image features, and deep-convolutional neural networks, State-of-the-art (SOTA) models and classification models, designed for object detection tracking, features labelling, instance segmentation and image classification, such as You Only Look Once (YOLO) model. Any other relevant image analysis tools and classification algorithms can be employed for this step.

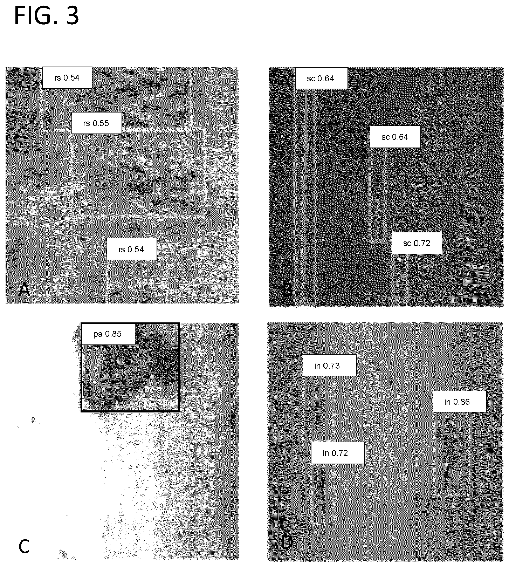

To extract target features in the data, the first artificial intelligence must be firstly trained. Such target features are defined by prior knowledges of the system. In the case of the nuclear system and of the graphite brick arrays of nuclear reactors, the target features encompass for instance a range of anomalies, including potential crack initiators, misalignments in the graphite bricks, outliers, etc, pointed by human operators and/or by classical recognition algorithms. Examples of typical target features to identifiy on the graphite brick pictures are displayed on figure 3 (non-exhaustive list). On this figure, the top left image A depicts rolled-in scale defects, top right image B shows scratches, bottom left image C shows abnormal patches and bottom right image D displays inclusions.

Moreover, for an efficient training, a sample of RVI pictures and data can be prepared. This sample is constituted by annotated data, prior to the training, for instance by delineating bounding boxes around the objects of interest with appropriate labeling, automatically and/or manually.

The training process of first artificial intelligence may be then performed by an automated system that partitions the sampled images and data into designated train, test, and validation datasets. Moreover, the training can be set with two different approaches, parametric or non-parametric learning, depending on the number of initial parameters (target features, data availability, and data sample quality and size). Conjointly, robust images and data annotation and labeling algorithm(s) can also be integrated to assist the SOTA model, such as Labelbox or Scale AI annotation tools.

Once the training is complete, the complete dataset of pictures and data collected during step S1 are integrated into the first artificial intelligence. The trained artificial intelligence thus extracts, from the collected data, identified defect(s) and its(their) associated labeled features, based on the target features for which the model has been trained. Examples of defects and their associated features identified by the first artificial intelligence are illustrated on Figure 3. On this figure, the coloured rectangles contain the annotations associated with each of these features, where each defect is identified by its abbreviation (rs = rolled-in scale (A), sc = scratches (B), pa = patches (C) and in = inclusions (D)) and the numerical value represents the approximate size of the defect.

Thereafter, all the data collected can be implemented as soon as it becomes available. If required, if a new parameter or a new feature is identified later on, for example a new type of defect appears, the model can be re-trained to include this new parameter.

In a preferred embodiment, the identified defect(s) are also integrated into defect reports, legible for human operators, and generated by a dedicated program, at the end of the step S2. In details, these reports can encompass any relevant information, such as the associated images and/or data in which the defect is detected, the relevant extracted features, the approximate dimensions and depth of the defect, past maintenance report of this brick section, etc, which enables a fast overview of the current state of the nuclear reactor, and facilitates its interpretation by the operators.

In addition, the reports are preferably also accessed by operators so they can provide feedbacks on the efficiency of the first artificial intelligence, by checking the accuracy of the identified defect(s) and labeled features relative to the inspection of the actual input data (collected RVI, pictures and/or supplementary data). Then, if the identified defects do not match the ones manually observed in the actual data, the first artificial intelligence can be re-trained with the step S2 worklow, for example with more parameters or with different target features.

Additionnally and optionnally, it is also possible to implement supplementary tools in the first aritificial intelligence to improve the identification of defect(s), as well as the classification and labeling of the dataset. These tools are represented with a dashed box on figure 1.

Here, according to an embodiment, in conjunction with the classification model of first artificial intelligence, a vector database equipped with a search engine could be integrated. This type of database not only facilitates efficient storage but also expedites the retrieval of specific reports. Since similar data are positioned close to each other in this vector space, it further simplifies the task of locating specific feature or data with shared characteristics or semantic search through data based on specific topics such as types of cracking, presence of outliers, etc. The search engine is notably designed to efficiently sift through the vast database, and enables to pinpoint the most relevant information possible in the vector database, thereby facilitating the identification of patterns or anomalies in the collected data, improving the identification of defect(s) by the first artificial intelligence of step S2.

In a preferred embodiment, the vector database can contain the existing maintenance reports and RVI data (or any data) with all the relevant annotations and identified features, where each entry of the database could be a report along with its corresponding video, represented by a unique vector. The search engine notably comprises classical database management systems (DBMS), or equivalent.

Moreover, another system using a large language model (LLM), or generative artificial intelligence models, can be implemented and performed over the vector database and/or over the collected data and/or maintenance report texts. LLM is employed to convert the extracted features and data in a natural language format from user's queries, which can be used to facilitate the outputs readability by human operators, making information retrieval and analysis more intuitive and efficient. Especially, it could provide new insights to operators, allowing to observe possibly hidden patterns in the data, which could further be used to refine the target features for the first artificial intelligence. For instance, the resulting outputs of LLM can be quantitative values, such as number of cracks in a given fuel channel, year of operation, physical state parameters gathered by operators during operation cycle, etc.

At the end of step S2, defect(s) is(are) identified and labelled, enabling the forecasting evaluation of the defect(s) evolution in the monitored system during step S3, in order to assess the predicted future state of the system. A second artificial intelligence is therefore implemented to compute the prediction.

In details, this step is performed by a neural network algorithm, integrating physical modeling of the system (classically referred to as "PINN" models for Physics-Informed Neural Networks) and a Bayesian inference approach.

The physical model is configured to simulate the dynamics, inherent to the system of the nuclear site. With this approach, the neural network is thus configured to approximate the behaviour of a function that effectively solves the governing equations of the system dynamics as a function of time or of period of time. With this solver, the PINN model is thus able to provide predictions of the evolution of the system dynamics, i.e. of defects, at any chosen time or period of time, and for instance in the near future (few minutes) up to very distant future (few months). The complementary Bayesian inference approach is employed in order to determine the reliability of the prediction(s) and to improve its(their) accuracy iteratively.

The governing equations and constraints of the inherent dynamics implemented in the PINN model are classically modelled by Ordinary Differential Equation (ODE). There, the second artificial intelligence is preferably trained with a hybrid strategy and iteratively, where supervised learning, using the outputs of step S2 as prior knowledge, is combined with the physics-based constraints derived from the ODE, enabling the network to learn from both the outputs of S2 while adhering to the fundamental physics principles of the system dynamics. More precisely, the second artificial intelligence minimises the error between the resulting values and the actual data (outputs of step S2) to solve the ODE system.

In the case of the nuclear reactor and its graphite brick structure, this involves modelling the dynamics and the progression of crack formation and/or alterations in the displacement of graphite brick arrays surrounding the reactor core, alongside other parameters such as temperature of operation, neutron flux, etc. Then, during the training phase, the second artificial intelligence is configured to deduce the reactor's state, establishing correlations with the observed number of cracks or relative positions within a designated fuel channel.

Alternatively, in the case where ODE (Ordinary Differential Equation) system is unavailable, particularly in systems where one or more components exhibit non-deterministic behavior, an example being the collective interaction of the brick lattice. In such cases, interactions among components can occur at random instances, and the forces involved in these interactions may exhibit nonlinear characteristics. This unpredictability makes it challenging to establish a deterministic ODE system. The Universal Differential Equations (UDE) approach serves as a highly accurate approximation model of the system's dynamics in the absence of a precise ODE system, enabling effective analysis and prediction of system behavior, even for these types of scenarios.

During the training phase of the neural network, each output, i.e. solver of the ODE and the associated prediction, is conjointly evaluated with the complementary Bayesian inference model. The Bayesian inference is configured to update iteratively prior beliefs during the training process in order to generate more accurate predictions and to refine the physical model solver, iterations after iterations.

To effectively integrate the Bayesian inference in the training process, a comprehensive initial set of prior distributions is defined, which encapsulate relevant characteristics about the anomalies/defects of the monitored nuclear system. For instance, the initial set of prior distributions can include the coordinates and positions of anomalies in the reference space, critical information about the bricks range of motion, displacement values, and any previously detected instances of cracks during the last inspection, etc. Then, a likelihood function $p(x_b|x_a)$ is defined, quantifying the probability of observing the actual data $p(x_b)$, e.g. identified defects and defect reports of step S2, given the model prior distribution $p(x_a)$. In other words, the likelihood function reflects the uncertainty between the prediction and the actual data. The posterior distribution, i.e. the prediction probability, is then defined with :

$$p(x_a|x_b) = \frac{p(x_a)\, p(x_b|x_a)}{p(x_b)}$$

In this, each new entry of actual data $x_b$ allows the posterior distribution to be refined from the prior distribution and the likelihood function. The process of evaluating the posterior distribution $p(x_a|x_b)$ of the latent variable $x_a$ given the observed variable $x_b$ is known as inference.

This approach is performed iteratively, meaning that at each iteration of this stage, the posterior distribution computed at the previous iteration, becomes the prior distribution of the current iteration. The Bayesian inference thus updates priors during the PINN training process, enabling the exploration of various input configurations and the iterative refinement of the priors, ultimately leading to more accurate solver and predictions. To effectively assess the accuracy of the predictions, the latter are compared against the collected data. For example, a score reflecting the degree of alignment between the predictions and the actual data can be assigned at each prediction. In addition, a confidence value associated to each prediction can also be computed, providing a comprehensive understanding of the reliability of the model predictions.

Then, the fourth step S4 of the method, as shown in figure 1, consists of setting up an operational procedure for the nuclear system, determined on the basis of the predictions of step S3.

The operational procedure can be defined automatically, particularly for non-critical or non-urgent anomalies, and/or manually by authorised operators. The procedure must be planned in an optimised and safe way, with the aim of reducing the system downtime to a minimum, thereby boosting the power plan productivity.

Additionally, the operational procedure can comprise an intervention deadline before which the procedure musts be carried. This deadline can be programmed on a recurring basis or adapted to each situation.

For example, the operational procedure can comprise selectively:

- interrupting the current operation mode of the system (so as to carry out immediately a maintenance procedure), or,
- continuing the current operation mode of the system (until a global maintenance procedure for the whole system, for example), or,

- continuing an operation of the system in a second operation mode (different from the current mode, for example) until the intervention deadline is reached.

Optionally, as displayed on figure 1, another supplementary step can be implemented (referenced "GUI dashboard"), after step S3 and/or step S4. This intermediary step consists of generating an informative dashboard, comprising all the relevant information obtained and identified during the different steps of the method.

The generation of such a dashboard is preferably automated, using adapted and classical interactive visualization algorithms, such as scatter plots, histograms, heatmaps, statistical distributions, word clouds, box plots, etc. Hence, the dashboard takes preferably the form of a graphical user interface (GUI) with command prompts, equipped with reactive data visualisation and present efficient document information retrieval capabilities. For example, it can include the prediction and its confidence value, a scheduling of critical component maintenance, an illustrative modelling of the system dynamics on a selected period of time, pictures and data associated with the identified defect, or several predictions can be displayed, organized on the basis of their associated confidence scores, etc. Therefore, this dashboard is specifically designed to facilitate interactions with human operators, which can execute natural language-based queries to retrieve the current reactor status and visualise data with ease.

Additionally, dashboard information can be employed as inputs for determining or adapting the operational procedures of step S4 and/or for assisting operators in their decision-making.

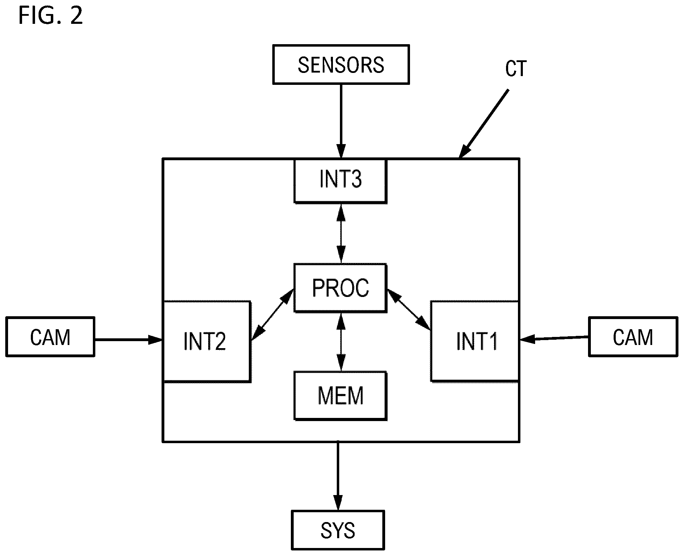

Reference is now made to figure 2. In this figure, the computer implemented method is carried out by a computer system CT. In preferred embodiments, the computer system CT comprises one or more processors PROC (which may belong to a same computer or to different computers) and one or more storage memories (magnetic hard disk, optical disk, electronic memory, or any computer readable storage medium) in which a computer program product is stored, in the form of a set of program-code instructions to be executed in order to implement all or part of the steps of the computer implemented method. The computer program product is loaded into an execution memory MEM, which allows the processor PROC to execute the computer implemented method.

Moreover, the computer system CT comprises several entry interfaces INT1, INT2, INT3, receiving data/pictures from camera(s) CAM, and supplementary data from human operators and/or external sensors SENSORS. The data collected by INT1, INT2, INT3 are implemented in the processor(s) PROC configured to read and process the data. Then the processor(s) PROC provide(s) a system output SYS of the computer implemented method, which is notably a prediction of a future state of a system of a nuclear site and a scheduling of an adapted operating procedure for the system.

The present description is not limited to the embodiments presented above and can find other applications. For example, the method described above could also find applications in other technical domains involving physical dynamics model, especially crack dynamics, and images processing, in order to monitor the health of various components and structures and their evolution through time. For instance, it could be employed and/or adapted for construction, manufacturing, aerospace, oil and gas domains, etc.

## Claims

1. A computer implemented method for monitoring a state of a system in a nuclear site, at least parts of the system being pictured by at least one camera, the method comprising:

   - collecting (S1) pictures of at least one part of the system, taken by at least one camera over time,
   - implementing (S2) a first artificial intelligence to detect at least one defect in said pictures,
   - implementing (S3) a second artificial intelligence to provide a prediction of a future state of said part of the system, from the at least one defect and according to a current operation mode of the system,
   - operating (S4) the system according to an adapted operational procedure, depending on said prediction.

2. The method according to claim 1, wherein the first artificial intelligence comprises a classification model to:

   - extract and label features from said pictures, and
   - detect and characterize said at least one defect.

3. The method of claim 2, wherein said classification model further provides an output defect report comprising the picture, the defect and the associated labelled features.

4. The method according to claim 3, further comprising a receiving of said output defect report, in an input of said second artificial intelligence.

5. The method according to any one of the precedent claims, wherein the second artificial intelligence comprises a neural network algorithm integrating a physical model of dynamics of the system.

**6.** The method according to claim 5, wherein the second artificial intelligence comprises said neural network algorithm and a Bayesian probabilistic model, and wherein said second artificial intelligence provides a confidence value of at least said prediction.

**7.** The method according to claim 6, wherein the second artificial intelligence is an iterative process, in which the prediction is calculated at each iteration from a result generated by the Bayesian probabilistic model at a previous iteration.

**8.** The method according to any one of the preceding claims, wherein the collected pictures of at least one part of the system comprise Remote Visual Inspection (RVI) image data, recorded at different times, different angles and different lightings, said pictures being pre-processed prior to their processing by the first artificial intelligence.

**9.** The method according to any one of the preceding claims, wherein data of said collected pictures are collected further with historical reports data of the system state.

**10.** The method according to claim 9, wherein said pictures and reports data are collected for said at least one part of the system, and arranged in a vector representing a current state of said at least one part of the system, and wherein the first artificial intelligence further implements a search engine to detect said at least one defect in said vector, by comparing said vector to a vector database of defects.

**11.** The method according to any one of the preceding claims, wherein the system comprises graphite bricks of a nuclear reactor, the collected pictures further comprising physical state information of the graphite bricks, and wherein said defect comprises at least one of a graphite brick crack and abnormal displacement of a brick towards another.

**12.** The method of claim 11, taken in combination with any one of claims 5, 6 and 7, wherein the physical model comprises a model of dynamics of cracks.

**13.** Computer program, comprising instructions for implementing the method according to any one of the preceding claims, when they are executed by a processing circuit.

**14.** Device comprising a processing circuit for carrying out the method according to any one of claims 1 to 12.

FIG. 1

Data
collecting    [ S1 ] ← RVI,
   data

Pre-processed data

First AI    [ S2 ] ←- Features - [ Vector database
   LLM ]

Identified defect(s)

Second AI    [ S3 ] --- Prediction(s) ---→ [ GUI dashboard ]

Prediction(s)

Operational
procedure    [ S4 ] ←-- Interpretations

FIG. 2

FIG. 3

| | Europäisches Patentamt European Patent Office Office européen des brevets | **EUROPEAN SEARCH REPORT** | **Application Number** EP 23 30 7159 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y | JAE JIN IK ET AL: "Development of fault diagnosis for nuclear power plant using deep learning and infrared sensor equipped UAV", ANNALS OF NUCLEAR ENERGY, vol. 181, February 2023 (2023-02), page 109577, XP093133034, GB ISSN: 0306-4549, DOI: 10.1016/j.anucene.2022.109577 | 1-5, 8-11,13, 14 | INV. G06T7/00 |
| A | * abstract * * sections 1-2 * | 6,7,12 | |
| Y | US 2021/364448 A1 (MEKALA ROHAN REDDY [US] ET AL) 25 November 2021 (2021-11-25) * paragraph [0005] * * paragraph [0021] - paragraph [0095] * | 1-5, 8-11,13, 14 | |
| Y | RHYS JONES HUW ET AL: "Adapting Data-Driven Techniques to Improve Surrogate Machine Learning Model Performance", IEEE ACCESS, vol. 11, 14 March 2023 (2023-03-14), pages 23909-23925, XP093133306, USA ISSN: 2169-3536, DOI: 10.1109/ACCESS.2023.3253429 sections II and III; * abstract * | 11 | **TECHNICAL FIELDS SEARCHED (IPC)** G06T |

-/--

The present search report has been drawn up for all claims

| Place of search | Date of completion of the search | Examiner |
| --- | --- | --- |
| Munich | 13 May 2024 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        .............................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 23 30 7159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SALAH A FAROUGHI ET AL: "Physics-Guided, Physics-Informed, and Physics-Encoded Neural Networks in Scientific Computing", ARXIV.ORG, CORNELL UNIVERSITY LIBRARY, 201 OLIN LIBRARY CORNELL UNIVERSITY ITHACA, NY 14853, 14 November 2022 (2022-11-14), XP091369239, * abstract * | 5 | |
| | ----- | | |

TECHNICAL FIELDS
SEARCHED (IPC)

The present search report has been drawn up for all claims

| Place of search | Date of completion of the search | Examiner |
|---|---|---|
| Munich | 13 May 2024 | Rockinger, Oliver |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

     .................................................................................................

& : member of the same patent family, corresponding
    document

EPO FORM 1503 03.82 (P04C01)

**EP 4 567 722 A1**

**ANNEX TO THE EUROPEAN SEARCH REPORT
ON EUROPEAN PATENT APPLICATION NO.**                    EP 23 30 7159

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2024

| Patent document cited in search report | Publication date | Patent family member(s) | Publication date |
|---|---|---|---|
| US 2021364448 A1 | 25-11-2021 | CN 116568858 A | 08-08-2023 |
| | | EP 4153533 A1 | 29-03-2023 |
| | | JP 2023528303 A | 04-07-2023 |
| | | US 2021364448 A1 | 25-11-2021 |
| | | US 2023349835 A1 | 02-11-2023 |
| | | WO 2021237076 A1 | 25-11-2021 |

EPO FORM P0459

For more details about this annex : see Official Journal of the European Patent Office, No. 12/82

14